# EUROPÄISCHE PATENTSCHRIFT

(11) **EP 1 256 299 B1**
(45) Veröffentlichungstag und Bekanntmachung des Hinweises auf die Patenterteilung: **03.01.2007**
(21) Anmeldenummer: 02005725.3
(22) Anmeldetag: 13.03.2002
(51) Int. Cl.: A47J 31/44

(54) **Vorrichtung zum Erhitzen und Aufschäumen von Milch**
Device for heating and frothing milk
Dispositif pour chauffer et émulsifier du lait

(30) Priorität: 11.05.2001 DE 10122983
(43) Veröffentlichungstag der Anmeldung: 13.11.2002
(73) Patentinhaber: NIRO-PLAN AG, 4663 Aarburg (CH)
(72) Erfinder:
(74) Vertreter: Brommer, Hans Joachim

(56) Entgegenhaltungen:
- EP-A- 0 801 922
- EP-A- 0 858 757
- DE-A- 3 838 235
- US-A- 4 779 519
- US-A- 5 509 349

## Beschreibung

Die Erfindung betrifft eine Vorrichtung zum wahlweisen Erhitzen und Aufschäumen von Milch, insbesondere in Verbindung mit Kaffeemaschinen, wobei die Milch mittels einer Pumpe aus einem Vorratsbehälter entnommen, danach - wahlweise mit Zusatzluft vermischt - erhitzt und schließlich dem Kaffee beigemischt oder anderweitig ausgegeben wird, wobei der in Abhängigkeit von der Zusatzluft-Zuführung bzw. Zusatzluft-Absperrung sich einstellende Druck in der Milchleitung zur Dossierung der Milchmenge dient.

Eine derartige Vorrichtung ist durch die US-A-4779519 bekannt.

Solche Vorrichtungen werden insbesondere dazu verwendet, um Cappuccino oder andere Milchmixgetränke herzustellen. Meist wird dabei die Milch durch eine Pumpe oder ein als Pumpe fungierendese Venturisystem aus einem Vorratsbehälter angesaugt und danach direkt oder mit zusätzlicher Luft vermischt zu einem Schaum zur Herstellung von Cappuccino verarbeitet. Die zusätzliche Luft wird manuell, meist aber automatisch über ein Dosierventil gesteuert.

Bei allen derartigen Systemen, bei denen wahlweise entweder nur reine Milch erhitzt oder Milchschaum erzeugt werden soll, ist es problematisch, die Milch bzw. den Schaum auf die richtige Temperatur zu bringen. Ursächlich hierfür sind die extrem unterschiedlichen Werte für die spezifische Wärme von Milch einerseits und Luft andererseits. Daher besteht die Gefahr, dass reine Milch nur unzureichend erhitzt, der Milchschaum hingegen überhitzt wird.

Zur teilweisen Beseitigung dieser Poblematik ist es bekannt, zusätzliche Ventile, Drosselbohrungen oder dergleichen einzusetzen, um die Milchmenge in Abhängigkeit vom Betriebszustand zu regulieren. Der Aufwand für den Einbau und die Steuerung dieser Ventile ist jedoch relativ hoch. Verzichtet man auf eine automatische Steuerung, muss statt dessen eine komplizierte Bedienung in Kauf genommen werden.

Hiervon ausgehend liegt die Aufgabe der vorliegenden Erfindung darin, die Milcherhitzung in Abhängigkeit von den beiden genannte Betriebszuständen mit einfacheren und kostengünstigeren Mitteln als bisher zu steuern. Insbesondere soll gewährleistet sein, dass die Milch genügend heiß, der Milchschaum jedoch nicht überhitzt wird.

Diese Aufgabe wird erfindungsgemäß dadurch gelöst, dass die Milchleitung ein Drosselventil enthält, dessen Stellung vom Druck in der Milchleitung abhängt. Die Erfindung geht dabei von dem Grundgedanken aus, dass sich in der Milchleitung unterschiedliche Drücke einstellen, je nach dem, ob das Ventil für die Zuführung von Zusatzluft geöffnet oder geschlossen ist. Wird die Milch, wie es meist der Fall ist, aus ihrem Vorratsbehälter durch Unterdruck abgesaugt, so verringert sich dieser Unterdruck, wenn gleichzeitig Zusatzluft in die Milchleitung einströmt. Durch Ausnützen dieses Druckunterschiedes lässt sich die Milchmenge in einfacher Weise regulieren, wobei der Durchschnittsfachmann für die konstruktive Ausgestaltung dieser Regulierung zahlreiche Möglichkeiten hat.

Vorzugsweise ist das Drosselventil als axialverschiebbarer Ventilkörper ausgebildet, der durch eine Rückstellfeder entgegen der Strömungsrichtung belastet wird. Besonders günstig ist es, wenn das Drosselventil durch einen in einem Gehäuse gelagerten Ventilkörper ausgebildet ist, und wenn dieses Gehäuse einen definierten Durchlass aufweist, der durch den Ventilkörper ganz oder teilweise verschließbar ist. Dabei besteht auch die Möglichkeit, dass der Ventilkörper selbst einen kleinen Durchlass aufweist, so dass der größere Gehäuse-Durchlass durch den kleineren Durchlass des Ventilkörpers ersetzt werden kann, wenn die Durchflussmenge gedrosselt werden soll.

Eine besonders zweckmäßige Ausgestaltung der Erfindung besteht darin, dass das Gehäuse mit dem Ventilkörper und seiner Rückstellfeder als Zubehörteil zum nachträglichen Einbau in die Milchleitung ausgebildet ist. Dadurch wird nicht nur der Einbau sondern auch die nachträgliche Aufrüstung herkömmlicher Kaffeemaschinen sehr erleichtert.

Damit für die Zusatzluft keine eigene Pumpe erforderlich ist, empfiehlt es sich, das Drosselventil in Strömungsrichtung vor der Saugpumpe und vor dem Zusatzluft-Anschluss in die Milchleitung einzubauen, insbesondere sie in die Milch-Ansaugdüse zu integrieren. Man kann dadurch unverändert mit den bisherigen Komponenten der Milchleitung arbeiten und braucht lediglich das erfindungsgemäße Drosselventil einzusetzen, um die erwünschte Regulierung der Milchmenge in Abhängigkeit von dem jeweiligen Betriebszustand Milcherhitzung bzw. Schaumerzeugung zu gewährleisten.

Weitere Merkmale und Vorteile der Erfindung ergeben sich aus der nachfolgenden Beschreibung eines Ausführungsbeispieles unter Bezugnahme auf eine Zeichnung; dabei zeigt
- Figur 1: eine schematische Darstellung des Fließschemas für die Milch, den Dampf und die Zusatzluft;
- Figur 2: das erfindungsgemäße Drosselventil in auseinandergezogener Darstellung;
- Figur 3: das Drosselventil gemäß Figur 2 in zusammengebauter Stellung beim Betriebszustand Schaumerzeugung und
- Figur 4: das gleiche Ventil beim Betriebszustand Milcherhitzung.

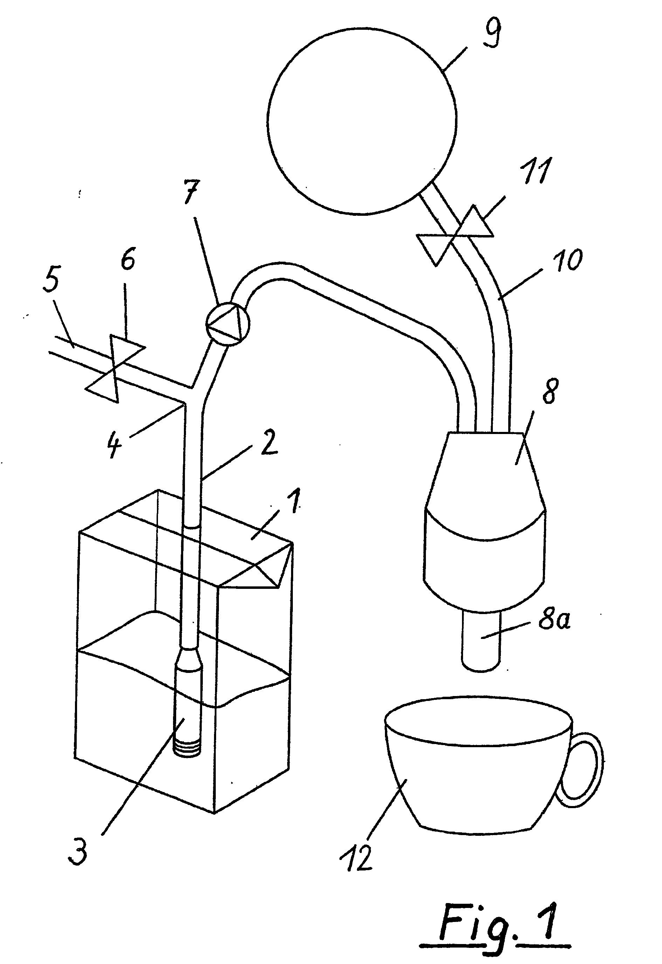

In Figur 1 erkennt man einen Milchvorratsbehälter 1, in den eine Milchleitung 2 mit ihrer Ansaugdüse 3 hineinragt. In die Ansaugdüse 3 ist zugleich das erfindungsgemäße Drosselventil zur Regulierung der Milchmenge eingebaut; jedoch könnte dieses Drosselventil auch an anderer Stelle in die Milchleitung 2 eingebaut sein, zweckmäßig aber stromaufwärts der Position 4, wo die Leitung 5 für die Zusatzluft in die Milchleitung 2 mündet. Die Zuführung bzw. Absperrung der Zusatzluft erfolgt durch ein Ventil 6.

Weiter stromabwärts ist die Milchleitung 2 an eine Förderpumpe 7 angeschlossen. Dabei kann es sich um eine mechanische Pumpe oder um eine Venturi-Düsenanordnung handeln, die meist mit Dampf betrieben wird. In beiden Fällen wird die Milch durch Unterdruck aus dem Behälter 1 herausgesaugt.

Die Milchleitung 2 mündet dann in eine Mischkammer 8, wo sie mit Dampf aus einem Dampfkessel 9, der über eine Leitung 10 und ein Dampfventil 11 an die Mischkammer angeschlossen ist, vermischt wird und schließlich über den Auslauf 8 a der Mischkammer in eine Tasse 12 ausgegeben wird.

Neben der Mischkammer 8 ist meist auch der Auslauf einer hier nicht näher gezeigten Brüheinheit einer Kaffeemaschine angeordnet.

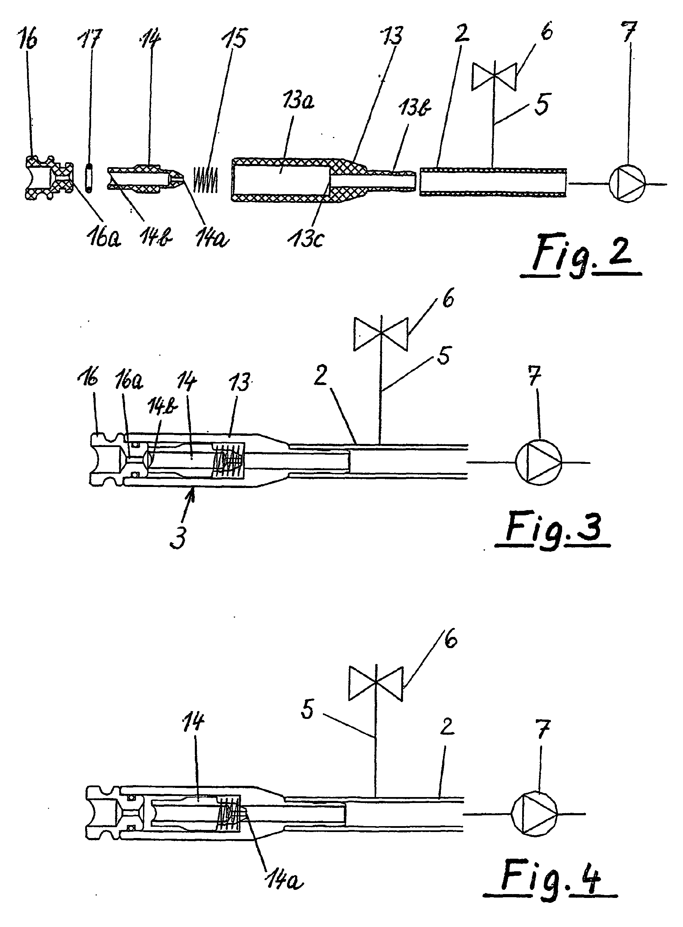

Die konstruktiven Einzelheiten des in die Ansaugdüse 3 integrierten erfindungsgemäßen Drosselventils ergeben sich aus den Figuren 2 bis 4. Man erkennt dort, dass die Ansaugdüse ein hülsenförmiges Gehäuse 13 aufweist, das an seinem linken Einströmende einen Bereich 13 a mit einem relativ großen Querschnitt, an seinem rechten Abströmende 13 b hingegen einen relativ kleinen Querschnitt aufweist. Insbesondere ist das Abströmende 13 b stöpselartig verlängert, so dass es direkt in die als flexibler Schlauch ausgebildete Milchleitung 2 hineingesteckt werden kann. Der Übergang zwischen dem großen und dem kleinen Querschnitt, der durch das Bezugszeichen 13 c markiert ist, fungiert als Dichtfläche für einen in dem großen Querschnitt axial verschiebbar gelagerten Ventilkörper 14.

Der Ventilkörper 14 stützt sich über radiale Vorsprünge an der Innenwandung des Gehäusebereiches 13 a ab, so dass er in Radialrichtung geführt ist. In Axialrichtung steht er unter der Wirkung einer Druckfeder 15, die entgegen der Strömungsrichtung der Milch auf ihn einwirkt, ihn also in Richtung auf das einströmseitige Ende des Gehäuses belastet. Dort stützt er sich an einer Einströmdüse 16 ab, die unter Zwischenlage eines Dichtringes 17 in das linke Ende des Gehäuses 13 eingeschraubt werden kann. Der Ventilkörper 14 ist dann elastisch im Gehäuse 13 verspannt.

Wesentlich ist nun, dass der Ventilkörper 14 ebenfalls hülsenförmig ausgebildet ist und eine Drosselöffnung 14 a mit definiertem Querschnitt aufweist. Wesentlich ist außerdem, dass der Ventilkörper 14 sowohl innen wie auch außen von Milch umströmbar ist. Dies ist im Ausführungsbeispiel dadurch gewährleistet, dass er radiale Vorsprünge und an seinem linken Ende Aussparungen 14 b aufweist.

Der zusammengebaute Zustand der Einströmdüse geht aus Figur 3 hervor. Die Feder 15 drückt dabei den Ventilkörper 14 gegen die Einströmdüse 16. Dadurch ist das vordere Ende des Ventilkörpers mit der Bohrung 14 a von der Dichtfläche 13 c des Gehäuses entfernt mit der Folge, dass die Milch sowohl innerhalb wie auch außerhalb des Ventilkörpers 14 entlangströmt. Die Drosselwirkung für die Milch wird hier im wesentlichen durch die Bohrung 16 a in der Einströmdüse 16 realisiert. Diese Drosselwirkung ist vergleichsweise gering, die angesaugte Milchmenge demnach relativ groß und bezogen auf die Heizleistung so bemessen, dass die mit Luft vermischte Milch nicht überhitzt wird und "ein feiner" Schaum erzeugt wird. Dieser Zustand stellt sich also nur ein, wenn das Ventil 6 für die Zusatzluft offen ist.

Befindet sich hingegen das Ventil 6 für die Zusatzluft in der Geschlossenstellung, so baut die Pumpe 7 einen stärkeren Unterdruck in der Milchleitung 2 auf. Dieser stärkere Unterdruck zieht den Ventilkörper 14 entgegen der Druckfeder 15 nach rechts, bis er an der Dichtfläche 13 c des Gehäuses anliegt. Dadurch wird eine Umströmung des Ventilkörpers 14 an seiner Außenseite verhindert und die gesamte Milch muss durch den engen Querschnitt der kleinen Drosselbohrung 14 a strömen. Die Drosselwirkung ist somit erheblich größer und die Milchdurchsatzmenge entsprechend geringer als in Figur 3.

Somit ist sichergestellt, dass bei der Zubereitung von Schaum, der einen geringen spezifischen Wärmebedarf hat, viel Milch zur Verfügung gestellt wird, bei der Erhitzung reiner Milch, die einen höheren spezifischen Wärmebedarf hat, hingegen weniger Milch zur Verfügung gestellt wird, so dass die gleiche Wärmemenge bei beiden Betriebszuständen passt.

## Patentansprüche

1. Vorrichtung zum Erhitzen und Aufschäumen von Milch, insbesondere in Verbindung mit Kaffeemaschinen, wobei die Milch über eine Milchleitung (2) mittels einer Fördervorrichtung, insbesondere einer Pumpe (7) aus einem Vorratsbehälter (1) entnommen, danach - wahlweise mit Zusatzluft vermischt - erhitzt und schließlich dem Kaffee beigemischt oder anderweitig ausgegeben wird, wobei der in Abhängigkeit von der Zusatzluft-Zuführung bzw. Zusatzluft-Absperrung sich einstellende Druck in der Milchleitung (2) zur Dosierung der Milchmenge dient,
**dadurch gekennzeichnet,**
**dass** die Milchleitung (2) ein Drosselventil (14) enthält, dessen Stellung vom Druck in der Milchleitung (2) abhängt.

2. Vorrichtung nach Anspruch 1,
**dadurch gekennzeichnet,**
**dass** das Drosselventil (14) als axial verschiebbarer Ventilkörper ausgebildet ist, der durch eine Rückstellfeder (15) entgegen der Strömungsrichtung belastet ist.

3. Vorrichtung nach Anspruch 1,
**dadurch gekennzeichnet,**
**dass** der Ventilkörper (14) verschiebbar in einem Gehäuse (13) angeordnet ist, das einen definierten Durchlass aufweist und dass dieser Durchlass durch den Ventilkörper ganz oder teilweise absperrbar ist.

4. **Vorrichtung nach Anspruch 3,**
**dadurch gekennzeichnet,**
**dass** der Ventilkörper (14) einen eigenen Durchlass (14 a) aufweist.

5. Vorrichtung nach Anspruch 3,
**dadurch gekennzeichnet,**
**dass** der Ventilkörper (14) innen und außen umströmbar ist.

6. Vorrichtung nach Anspruch 3,
**dadurch gekennzeichnet,**
**dass** das Gehäuse (13) mit dem Drosselventil (14) und seiner Rückstellfeder (15) als Zubehörteil zum nachträglichen Einbau in die Milchleitung (2) ausgebildet ist.

7. **Vorrichtung nach Anspruch 1 oder 3,**
**dadurch gekennzeichnet,**
**dass** das Drosselventil (14) in die Ansaugdüse (3) der Milchleitung (2) eingebaut ist.

8. Vorrichtung nach Anspruch 1 oder 3,
**dadurch gekennzeichnet,**
**dass** das Drosselventil (14) in Strömungsrichtung vor dem Zusatzluft-Anschluss (4) und vor einer Saugvorrichtung, insbesondere einer Pumpe (7) angeordnet ist.

## Claims

1. Device for heating and frothing milk, in particular in connection with coffee machines, in which the milk is removed from a storage container (1) via a milk pipe (2) by means of a conveying device, in particular a pump (7), then - mixed with additional air as required - heated and finally mixed with the coffee or dispensed in some other way, wherein the pressure which is established in the milk pipe (2) as a function of the supply of additional air or the shutting off of additional air serves for metering the quantity of milk, **characterised in that** the milk pipe (2) contains a throttle valve (14), the position of which is dependent upon the pressure in the milk pipe (2).

2. Device as claimed in Claim 1, **characterised in that** the throttle valve (14) is constructed as an axially displaceable valve body which is loaded against the flow direction by a restoring spring (15).

3. Device as claimed in Claim 1, **characterised in that** the valve body (14) is displaceably disposed in a housing (13) which has a defined through passage, and that this through passage can be completely or partially shut off by the valve body.

4. Device as claimed in Claim 3, **characterised in that** the valve body (14) has its own through passage (14a).

5. Device as claimed in Claim 3, **characterised in that** the flow can pass internally and externally around the valve body (14).

6. Device as claimed in Claim 3, **characterised in that** the housing (13) with the throttle valve (14) and its restoring spring (15) is constructed as an accessory for installation into the milk pipe (2) at a later stage.

7. Device as claimed in Claim 1 or 3, **characterised in that** the throttle valve (14) is installed in the intake nozzle (3) of the milk pipe (2).

8. Device as claimed in Claim 1 or 3, **characterised in that** the throttle valve (14) is disposed before the additional air connection (4) and before a suction device, in particular a pump (7), in the direction of flow.

## Revendications

1. Dispositif pour chauffer et faire mousser du lait, en particulier en liaison avec des machines à café, le lait étant extrait d'un réservoir de stockage (1) par l'intermédiaire d'une conduite de lait (2) au moyen d'un dispositif d'extraction, en particulier une pompe (7), puis, mélangé optionnellement avec de l'air additionnel, chauffé, et enfin ajouté au café ou évacué ailleurs, la pression s'établissant dans la conduite de lait (2) en fonction de l'apport d'air additionnel ou du blocage d'air additionnel servant à doser la quantité de lait, **caractérisé en ce que**, la conduite de lait (2) comporte une soupape d'étranglement (14) dont la position dépend de la pression présente dans la conduite de lait (2).

2. Dispositif selon la revendication 1, **caractérisé en ce que** la soupape d'étranglement (14) est conçue comme un corps de soupape pouvant coulisser axialement, qui est maintenu sous contrainte par un ressort de rappel (15) à l'encontre du sens d'écoulement.

3. Dispositif selon la revendication 1, **caractérisé en ce que** le corps de soupape (14) est disposé dans un logement (13) de façon à pouvoir coulisser, qui présente un passage défini, et **en ce que** ce passage peut être entièrement ou partiellement fermé par le corps de soupape.

4. Dispositif selon la revendication 3, **caractérisé en ce que** le corps de soupape (14) comporte un propre passage (14 a).

5. Dispositif selon la revendication 3, **caractérisé en ce que** le corps de soupape (14) peut être contourné à l'intérieur et à l'extérieur.

6. Dispositif selon la revendication 3, **caractérisé en ce que** le logement (13) avec la soupape d'étranglement (14) et son ressort de rappel (15) est conçu comme une pièce accessoire pour être encastré ultérieurement dans la conduite de lait (2).

7. Dispositif selon la revendication 1 ou 3, **caractérisé en ce que** la soupape d'étranglement (14) est encastrée dans la buse d'aspiration (3) de la conduite de lait (2).

8. Dispositif selon la revendication 1 ou 3, **caractérisé en ce que** la soupape d'étranglement (14) est disposée, dans le sens d'écoulement, avant le raccordement d'air additionnel (4) et avant un dispositif d'aspiration, en particulier une pompe (7).
